# EUROPÄISCHE PATENTSCHRIFT

(11) **EP 1 401 959 B1**
(45) Veröffentlichungstag und Bekanntmachung des Hinweises auf die Patenterteilung: **15.03.2006**
(21) Anmeldenummer: 02743121.2
(22) Anmeldetag: 28.05.2002
(51) Int. Cl.: C08L 81/02, C08L 81/06, C08K 7/14, C08K 9/04, B29C 45/00

(54) **VERFAHREN ZUR HERSTELLUNG GRATARMER FORMTEILE**
METHOD FOR PRODUCING SHAPED PARTS WITH A SMALL FLASH
PROCEDE DE FABRICATION DE COMPOSANTS MOULES PRESENTANT DES BAVURES REDUITES

(30) Priorität: 31.05.2001 DE 10126629
(43) Veröffentlichungstag der Anmeldung: 31.03.2004
(73) Patentinhaber: Ticona GmbH, 65451 Kelsterbach (DE)
(72) Erfinder: KLINK, Holger, 64367 Mühltal (DE); REIL, Frank, 64342 Seeheim (DE)
(86) Internationale Anmeldenummer: PCT/EP2002/005852
(87) Internationale Veröffentlichungsnummer: WO 2002/096990

(56) Entgegenhaltungen:
- EP-A- 0 253 717
- WO-A-02/26466
- US-A- 5 158 986

## Beschreibung

Die vorliegende Erfindung betrifft ein Verfahren zur Herstellung von Formkörpern aus Polyarylensulfiden, insbesondere Polyphenylensulfid, wodurch eine besonders geringe Gratbildung bewirkt werden kann.

Die Gratbildung von Polyarylensulfiden, auch als "Flash" bekannt, führt immer wieder zu Problemen beim Spritzguß mit diesen Materialien. Diese werden durch die niedrige Viskosität und geringe Kristallisationsgeschwindigkeit des Materials verursacht. Zur Behebung dieses Problems werden an die Spritzgußformen bei der Verwendung von Polyarylensulfiden hohe Präzisionsanforderungen gestellt. Die Entlüftung der Form muß sehr gut sei, wozu zahlreiche Entlüftungskanäle in hoher Präzision und in besonderer Form angefertigt werden. Beim Spritzgußvorgang selbst müssen hohe Schließkräfte angewandt werden.
DE 41 28 079 beschreibt Mischungen aus Polyarylensulfiden enthaltend novolakartige Kondensate, die eine reduzierte Schwimmhautbildung (Flash) aufweisen.

Es wurde überraschend festgestellt, daß bei der Herstellung von Formteilen aus Polyarylensulfiden mit dem MuCell Verfahren und der damit verbundenen weiteren Absenkung der Schmelzviskosität der Formkörper die Gratbildung deutlich reduziert ist. Die Erfindung betrifft daher ein Verfahren zur Herstellung von Formkörpern mit reduzierter Gratbildung aus Polyarylensulfiden, dadurch gekennzeichnet, daß eine homogene Schmelze von Polyarylensulfiden erzeugt wird, bis zu 30 Gew.-%, bezogen auf die Schmelze, eines Fluids in der Polyarylensulfidschmelze gelöst wird, das sich bei den Plastifizierbedingungen für Polyarylensulfid über dem kritischen Punkt befindet, und die Mischung in eine Spritzgußform gefüllt wird. Beim Füllvorgang bilden sich Blasen in der erstarrenden Mischung und bei der Erstarrung des Materials in der Spritzgußform entsteht ein Formkörper mit einer reduzierten Gratbildung.

Die vorliegende Erfindung betrifft außerdem die nach dem Verfahren hergestellten Formkörper.

Durch das erfindungsgemäße Verfahren wird die Gratbildung soweit reduziert, daß die Nachbearbeitung spritzgegegossener Formteile zur Entfernung der Grate reduziert oder ganz eingespart werden kann.
Im vorliegenden Verfahren wird eine homogene Schmelze von Polyarylensulfiden erzeugt und bis zu 30 Gew.-%, bevorzugt 5 bis 27 Gew.-%, besonders bevorzugt 7 bis 23, insbesondere 7 bis 21 Gew.-% eines Fluids zugegeben, welches sich im superkritischen Zustand befindet. Das Fluid und die Polyarylensulfidschmelze werden nach allgemein bekannten Verfahren gegebenenfalls geschert und gemischt, zum Beispiel in einem Extruder oder einem Kneter, wobei das Fluid in der Polyarylensulfidschmelze gelöst wird. Die Menge des Fluids wird so gewählt, daß die Lösung des Fluids in der Polyarylensulfidschmelze bis zu 60% unter der Viskosität der reinen Polyarylensulfidschmelze liegt. Die Menge des Fluids kann so gewählt werden, daß die gewünschte Viskosität erreicht wird. Die Mischung wird schnell in eine Spritzgußform gefüllt. Der Nachdruck, der von dem Gasdruck übernommen wird, kann bis auf Null reduziert werden. Der Injektionsdruck wird im Allgemeinen so gewählt, daß er bis zu 45%, vorteilhaft bis zu 30%, insbesondere bis zu 20% unter dem Injektionsdruck liegt, der bei Verwendung einer Polyarylensulfidschmelze üblicherweise notwendig ist. Der Schließdruck (Schließkraft) der Form kann auf bis zu 30%, vorteilhaft bis zu 25%, insbesondere bis zu 10% gegenüber den bekannten Verfahren bei Verwendung einer reinen Polyarylensulfidschmelze gesenkt werden und liegt im Allgemeinen im Bereich von 500 N (0,05 t/cm²) bis 10.000 N (1 t/cm²), vorteilhaft von 1000 N (0,1 t/cm²) bis 7000 N (0,7 t/cm²), insbesondere von 1200 N (0,12 t/cm²) bis 6100 N (0,61 t/cm²).
Als Fluid können prinzipiell alle geeigneten Fluide eingesetzt werden, bevorzugt sind jedoch atmosphärische Gase, insbesondere Kohlendioxid und Stickstoff. Erfindungsgemäß können alle an sich bekannten thermoplastischen Polyarylensulfide eingesetzt werden. Geeignete Materialien werden zum Beispiel beschrieben in Saechtling, Kunststoff-Taschenbuch, Hanser-Verlag, 27. Ausgabe, auf den Seiten 495 bis 498, worauf Bezug genommen wird. Vorteilhaft ist Polyphenylensulfid, PPS.
Polyarylensulfide können über dihalogenierte aromatische Verbindungen hergestellt werden. Bevorzugte dihalogenierte aromatische Verbindungen sind p-Dichlorbenzol, m-Dichlorbenzol, 2,5-Dichlortoluol, p-Dibrornbenzol, 1,4-Dichlomaphthalin, 1-Methoxy-2,5-dichlorbenzol, 4,4'-Dichlorbiphenyl, 3,5-Dichlorbenzoesäure, 4,4'-Dichlordiphenylether, 4,4'-Dichlodiphenylsulfon, 4,4'-Dichlordiphenylsulfoxid und 4,4'-Dichlordiphenylketon. Andere halogenierte Verbindungen wie beispielsweise trihalogenierte Aromaten können in geringen Mengen eingesetzt werden, um die Eigenschaften des Polymeren gezielt zu beeinflussen.

Erfindungsgemäß wird als Polyarylensulfid bevorzugt Polyphenylensulfid eingesetzt. Polyphenylensulfid (PPS), ist ein teilweise kristallines Polymer mit der allgemeinen Formel: 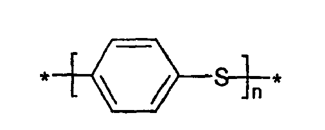
wobei n > 1 ist und das Polymer mindestens eine Molmasse (M_{w}) von 200 g/mol besitzt.

Das Polyarylensulfid kann auch übliche Zusatz- und Verstärkungsstoffe enthalten, wie zum Beispiel Fasern, insbesondere Glasfasem, Kohlefasem, Aramidfasern, Mineralfasem, Verarbeitungshilfen, polymere Gleitstoffe, Gleitmittel mit äußerer und/oder innerer Gleitwirkung, ultrahochmolekulares Polyethylen (PE-UHMW), Polytetrafluorethylen (PTFE) oder ein Pfropf-Copolymer, welches ein Produkt einer Pfropfreaktion aus einem Olefin-Polymer und einem Acrylnitril/Styrol-Copolymer ist, Antioxidantien, Haftvermittler, Wachse, Nukleierungsmittel, Entformungshilfen, Glaskugeln, mineralische Füllstoffe wie Kreide, Calciumcarbonat, Wollastonit, Siliciumdioxid, Talk, Glimmer, Montmorillonit, organisch modifiziert oder unmodifiziert, organisch modifizierte oder unmodifizierte Schichtsilikate, mit dem flüssigkristallinen Kunststoff oder dem Polyarylensulfid Nanokomposite bildende Materialien oder Nylon-Nanokomposite oder Mischungen der vorgenannten Stoffe.

Als Gleitmittel kann ein Gemisch aus einem Gleitmittel mit äußerer Gleitwirkung und aus einem Gleitmittel mit innerer Gleitwirkung eingesetzt werden. Das Mischungsverhältnis Gleitmittel mit innerer Gleitwirkung zu Gleitmittel mit äußerer Gleitwirkung kann von 0 zu 100 bis 100 zu 0 Gewichtsteilen betragen Als Gleitmittel mit überwiegend äußerer Gleitwirkung können feste und/oder flüssige Paraffine, Montansäureester, teilverseifte Montansäureester, Stearinsäuren, polare und/oder unpolare Polyethylenwachse, Poly-α-Olefin-Oligomere, Silikonöle, Polyalkylenglykole und Perfluoralkylether eingesetzt werden. Seifen und Ester, auch teilverseifte, sind sowohl Gleitmittel mit äußerer als auch innerer Gleitwirkung. Bevorzugt wird ein hochmolekulares, oxidiertes und damit polares Polyethylenwachs eingesetzt. Es verbessert das tribologische Verhalten und läßt die mechanischen Eigenschaften weniger stark abfallen. Als Gleitmittel mit überwiegend innerer Gleitwirkung wird bevorzugt Stearylstearat eingesetzt.
Paraffine fest und flüssig, Stearinsäuren, Polyethylenwachse unpolar und polar, Poly-α-Olefin Oligomere, Silikonöle, Polyakylenglykole und Perfluoralkylether sind Gleitmittel mit äußerer Gleitwirkung. Seifen und Ester, auch teilverseifte, sind Gleitmittel mit sowohl äußerer als auch innerer Gleitwirkung. Montansäureester und Montansäureester teilverseift sind Gleitmittel mit äußerer Gleitwirkung.
Das bevorzugte oxidierte Polyethylenwachs ist ein hochmolekulares, polares Wachs und besitzt im allgemeinen eine Säurezahl von 12 bis 20 mg KOH/g und eine Viskosität von 3000 bis 5000 mPa•s bei 140°C.

Als Gleitmittel mit überwiegend innerer Gleitwirkung sind zu nennen: Fettalkohole, Dicarbonsäure-Ester, Fettsäure-Ester, Fettsäure, fettsaure Seifen, Fettamid , Wachsester und Stearylstearate wobei letztgenanntem der Vorzug gegeben wird. Gleitmittel werden beschrieben in Gächter/Müller, "Taschenbuch der Kunststoff-Additive", 3. Ausgabe, Carl Hanser Verlag München/Wien 1994, Seite 478-504 worauf Bezug genommen wird.

## Patentansprüche

1. Verfahren zur Herstellung von Formkörpern aus Polyarylensulfiden durch Spritzgießen mit einer reduzierten Gratbildung, **dadurch gekennzeichnet, daß** eine homogene Schmelze von Polyarylensulfiden erzeugt wird, bis zu 30 Gew.-% eines Fluids in der Polyarylensulfidschmelze gelöst wird, das sich bei den Plastifizierbedingungen für Polyarylensulfid über dem kritischen Punkt befindet, und die Mischung in eine Spritzgußform gefüllt wird.

2. Verfahren nach Anspruch 1, wobei die Menge des Fluids so gewählt wird, daß die Viskosität der Polyarylensulfidschmelze mit gelöstem Fluid bei gleicher Temperatur und Scherung bis zu 60% unter der Viskosität der reinen Polyarylensulfidschmelze liegt.

3. Verfahren nach Anspruch 1 oder 2, wobei als Polyarylensulfid Polyphenylensulfid eingesetzt wird.

4. Verfahren nach einem oder mehreren der Ansprüche 1 bis 3, wobei der Schließdruck der Spritzgußform im Bereich von 500 N (0,05 t/cm²) bis 10.000 N (1 t/cm²) liegt und/oder höchstens 30% des bei Verwendung einer reinen Polyarylensulfidschmelze verwendeten Schließdrucks beträgt.

5. Verfahren nach einem oder mehreren der Ansprüche 1 bis 4, wobei als Fluid Stickstoff oder Kohlendioxid eingesetzt werden.

## Claims

1. A process for producing moldings from polyarylene sulfides by injection molding with reduced formation of flash, which comprises producing a homogeneous melt from polyarylene sulfides, dissolving in the polyarylene sulfide melt up to 30% by weight of a fluid which is above its critical point under the plastifying conditions for polyarylene sulfide, and charging the mixture to an injection mold.

2. The process as claimed in claim 1, where the selection of the amount of the fluid is such that the viscosity of the polyarylene sulfide melt with dissolved fluid is up to 60% below the viscosity of the pure polyarylene sulfide melt at the same temperature and shear rate.

3. The process as claimed in claim 1 or 2, wherein polyphenylene sulfide is used as polyarylene sulfide.

4. The process as claimed in one or more of claims 1 to 3, where the locking force for the injection mold is in the range from 500 N (0.05 t/cm²) to 10 000 N (1 t/cm²), and/or not more than 30% of the locking force used when using a pure polyarylene sulfide melt.

5. The process as claimed in one or more of claims 1 to 4, where nitrogen or carbon dioxide is used as fluid.

## Revendications

1. Procédé pour la production de corps moulés à base de poly(sulfure d'arylène)s, par moulage par injection avec une formation réduite de bavures, **caractérisé en ce qu'**on produit une masse fondue homogène de poly(sulfure d'arylène)s, on dissout dans la masse fondue de poly(sulfure d'arylène) jusqu'à 30 % en poids d'un fluide qui se trouve au-dessus du point critique dans les conditions de plastification pour le poly(sulfure d'arylène) et on introduit le mélange dans un moule de moulage par injection.

2. Procédé selon la revendication 1, dans lequel la quantité du fluide est choisie de manière que la viscosité de la masse fondue de poly(sulfure d'arylène) avec le fluide dissous soit de jusqu'à 60 % inférieure à la viscosité de la masse fondue de poly(sulfure d'arylène) pur, à la même température et au même cisaillement.

3. Procédé selon la revendication 1 ou 2, dans lequel on utilise comme poly(sulfure d'arylène) du poly(sulfure de phénylène).

4. Procédé selon une ou plusieurs des revendications 1 à 3, dans lequel la pression de fermeture du moule de moulage par injection se trouve dans la plage de 500 N (0,05 t/cm²) à 10 000 N (1 t/cm²) et/ou représente au maximum 30 % de la pression de fermeture utilisée lorsqu'on utilise une masse fondue de poly(sulfure d'arylène) pur.

5. Procédé selon une ou plusieurs des revendications 1 à 4, dans lequel on utilise comme fluide de l'azote ou du dioxyde de carbone.
